# EUROPEAN PATENT APPLICATION

(11) **EP 2 620 748 A2**
(43) Date of publication of application: **31.07.2013**
(21) Application number: 13151889.6
(22) Date of filing: 18.01.2013
(51) Int. Cl.: G01C 21/32, G01C 21/36

(54) **Device for providing or generating intertwined information related to a space of interest.**

(30) Priority: 26.01.2012 US 201261591053 P
(71) Applicant: HYUNDAI MOTOR COMPANY, Seoul 137-938 (KR)
(72) Inventor: Kwon, Soon Sung, 431-904 Anyang-si (KR); Park, Cheol Woo, 138-751 Seoul (KR)
(74) Representative: Isarpatent

(57) **Abstract**

Disclosed herein is a navigator for providing intertwined information related to a space of interest (SOI). The navigator includes an input unit configured to receive an input for selecting one SOI from a user; a control unit configured to request intertwined information on the selected SOI based on the input; an intertwined information processing unit configured to collect pieces of object information, intertwined with the SOI, from an intertwined information structure related to the SOI at a request of the control unit; and a display unit configured to display the intertwined information to the user, wherein the intertwined information structure includes the highest-ranking object, a lower-ranking object including a content object or an SOI object, and the lowest-ranking object, the highest-ranking object, the lower-ranking object, and the lowest-ranking object are connected by at least one relation object, and the relation object comprises relation information, defining a relation for at least two objects connected by the relation object, and identifier (ID) information for a bidirectional connection.

## Description

### CROSS-REFERENCE TO RELATED APPLICATIONS

This application is based on and claims priority from US Provisional Application for Patent No. 61/591,053 filed on January 26, 2012 in the U.S. Patent and Trademark Office. The entire content of each of the above-referenced patent applications is hereby incorporated by reference.

### FIELD OF THE INVENTION

Embodiments of the present invention relate to an apparatus and method for generating intertwined information using an SOI and content, and more particularly to an apparatus and method for generating and providing intertwined information configured by using at least one space of interest (SOI) including location information, shape information, and ID information, at least one piece of content, and a relation object including relation information content and content and/or between content and an SOI.

### BACKGROUND OF THE INVENTION

Information has a ripple effect when the information is transferred with a story rather than when the information is transferred in fragments. When a story and a place are combined, the story can be connected to a user's direct behavior. A conventional apparatus for generating relation information using a point of interest (POI) generates relation information by simply linking a specific POI point and a website, including detailed information corresponding to the specific POI point, together. However, this method is also technology based on a POI. There is a need for a method of generating relation information having a new concept based on an SOI.

### BRIEF SUMMARY OF THE INVENTION

It is an object of the present invention to provide an apparatus and method for generating a complex object of an SOI and content, which can increase the connection extensibility of content for an SOI by generating second relation information between an SOI and a piece of content including a relation object between the SOI and the piece of content or having first relation information between the piece of content and another SOI.

It is another object of the present invention to easily edit intertwined information between an SOI and content on the basis of a relation by using a relation object, intuitively provide (intertwined) information related to an SOI to a user who uses a navigator on the basis of intertwined information, and enable a user to extend the (intertwined) information in various manners.

Objects of the present invention are not limited to the aforementioned objects, and other objects and advantages of the present invention that have not been described will be understood from the following description and will become more evident by embodiments of the present invention. It may also be easily seen that the objects and advantages of the present invention can be realized by means written in the claims and a combination thereof.

In an aspect of the present invention, a navigator for providing intertwined information related to an SOI includes an input unit configured to receive an input for selecting one SOI from a user; a control unit configured to request intertwined information on the selected SOI based on the input; an intertwined information processing unit configured to collect pieces of object information, intertwined with the SOI, from an intertwined information structure related to the SOI at a request of the control unit; and a display unit configured to display the intertwined information to the user, wherein the intertwined information structure includes the highest-ranking object, a lower-ranking object including a content object or an SOI object, and the lowest-ranking object, the highest-ranking object, the lower-ranking object, and the lowest-ranking object are connected by at least one relation object, and the relation object comprises relation information, defining a relation for at least two objects connected by the relation object, and identifier (ID) information for a bidirectional connection.

In another aspect of the present invention, an apparatus for generating intertwined information including the highest-ranking object, a lower-ranking object including a content object or an SOI object, and the lowest-ranking object which are connected by at least one relation object includes the theme generation unit configured to configure the highest-ranking object; a relation edition unit configured to edit a relation that connects at least two objects of the highest-ranking object, the content object, and the SOI object; and a relation decision unit configured to decide a relation object, comprising information on the relation edited by the relation edition unit, information on the at least two objects related to the relation, and identifier (ID) information for a bidirectional connection between the at least two objects, wherein the relation edition unit comprises a relation object inheritance unit for inheriting information on an object that is able to be indirectly connected to the at least two objects.

In addition, a variety of solving means are suggested in the detailed description or claims.

### BRIEF DESCRIPTION OF THE DRAWINGS

FIG. 1 shows the structure of an SOI generation apparatus in accordance with one embodiment of the present invention;
FIG. 2 shows the structure of a device in accordance with one embodiment of the present invention;
FIG. 3 shows the characteristics of a connection that forms a conventional web and a connection that is used in intertwined information of the present invention;
FIG. 4 shows an example of an intertwined information structure;
FIG. 5 shows another example of an intertwined information structu re;
FIG. 6 shows the construction of an intertwined information generation apparatus in accordance with one embodiment of the present invention;
FIG. 7 is a flowchart illustrating a method of generating intertwined information in accordance with one embodiment of the present invention;
FIG. 8 shows the documented structure of intertwined information;
FIG. 9 shows the extension of intertwined information in a text stage;
FIG. 10 shows the extension of intertwined information in a sub-theme stage;
FIG. 11 is a conceptual diagram for editing intertwined information by using a relation object;
FIG. 12 shows an intertwined information generation apparatus in accordance with another embodiment of the present invention; and
FIG. 13 shows an exemplary method of providing intertwined information through a device.

### DESCRIPTION OF EMBODIMENTS

Reference will now be made in detail to the embodiments of the present invention, examples of which are illustrated in the accompanying drawings. Wherever possible, the same reference numbers will be used throughout the drawings to refer to the same or like parts. It is to be understood that the detailed description which will be disclosed along with the accompanying drawings is intended to describe the exemplary embodiments of the present invention and is not intended to describe a unique embodiment through which the present invention can be carried out. Hereinafter, the detailed description includes detailed matters to provide full understanding of the present invention. However, it will be apparent to those skilled in the art that the present invention can be carried out without such detailed matters. In some instances, well-known structures and devices are omitted in order to avoid obscuring the concepts of the present invention and the important functions of the structures and devices are shown in block diagram form.

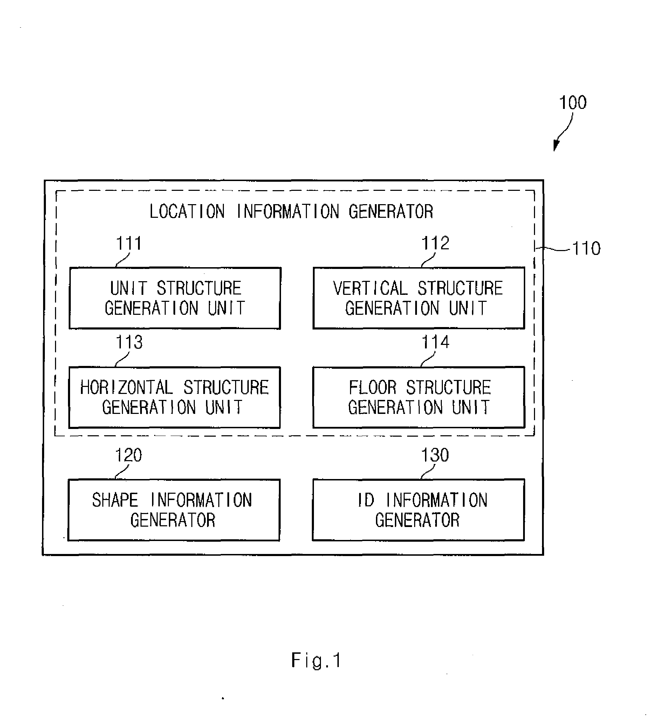

FIG. 1 shows the structure of an SOI generation apparatus 100 in accordance with one embodiment of the present invention. Referring to FIG. 1, the SOI generation apparatus 100 basically includes a location information generator 110, a shape information generator 120, and an identifier (ID) information generator 130. The location information generator 110 generates location information, SOI structure information, SOI combination information, etc. on a map. The shape information generator 120 generates shape information, such as information on dots, lines (paths), and areas or information on buildings, on the location information. The ID information generator 130 generates ID information for distinguishing SOIs from one another and assigns each SOI to the generated ID information.

Furthermore, the location information generator 110 generates location information, generates SOIs for the location information, and manages the generated SOIs. The location information generator 110 manages structure information if SOIs are generated so that they have structures and manages combination information if the structures of SOIs are combined.

The location information generator 110 includes a unit structure generation unit 111 for generating and managing one SOI, a vertical structure generation unit 112 for generating and managing the vertical structure of SOIs so that a plurality of SOIs is included in one SOI, a horizontal structure generation unit 113 for generating and managing the horizontal structures of SOIs so that a plurality of SOIs is connected in parallel, and a floor structure generation unit 114 for generating and managing the floor-structures of SOIs so that a plurality of SOIs forms a floor within one SOI.

The vertical structure generation unit 112 generates SOIs in the form of a vertical structure so that one or more pieces of other location information can be included in a piece of location information, that is, at least one lower-ranking SOI is placed within one SOI. For example, the vertical structure generation unit 112 can generate SOIs so that a building 1 and a building 2 are included in an area A. That is, the area A is generated as a higher-ranking SOI, and the building 1 and the building 2 are managed as the respective lower-ranking SOIs of the higher-ranking SOI.

The horizontal structure generation unit 113 generates SOIs in the form of a horizontal structure so that a plurality of SOIs is horizontally placed without a floor. For example, the horizontal structure generation unit 113 can generate SOIs so that an area B, a building 1, and a building 2 are horizontally connected. That is, the area B, the building 1, and the building 2 are generated as respective SOIs and are manages so that they are connected.

The floor structure generation unit 114 generates and manages SOIs so that a plurality of floors can be included within one area or building, that is, a plurality of SOIs forms a floor within one SOI. For example, the floor structure generation unit 114 can generate and manage SOIs so that a plurality of SOIs forms a floor within one building. That is, one building is generated as a higher-ranking SOI, floors are classified as the respective lower-ranking SOIs of the higher-ranking SOI, and the SOIs are separately managed.

The shape information generator 120 generates pieces of information on shapes, that is, substantial images, such as information on dots, lines, and areas or information on buildings, on location information and manages the pieces of information for every SOI. For example, the shape information generator 120 can image the area for every SOI, image buildings within the area for every SOI, and image constructions within the building for every SOI.

The ID information generator 130 generates and manages ID information on an SOI generated according to each structure by the location information generator 110. When one SOI is generated, the ID information generator 130 assigns an SOI ID to the generated SOI so that information can be managed in an SOI unit.

Information on a generated SOI can be utilized in various manners in examples to be described later.

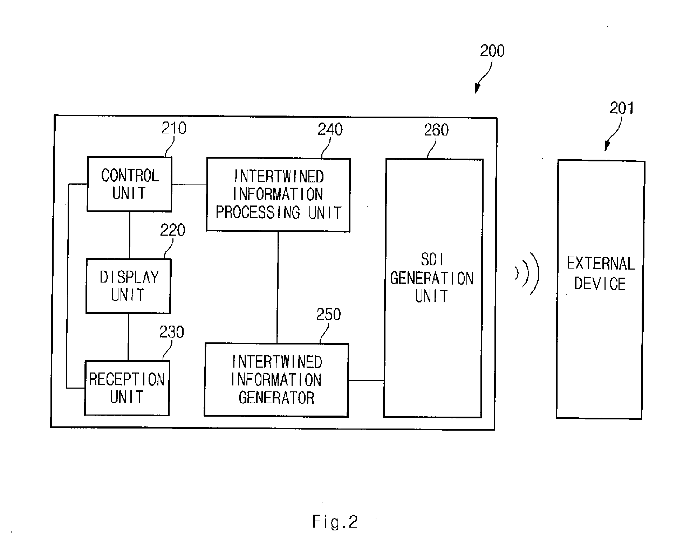

FIG. 2 shows the structure of a device 200 in accordance with one embodiment of the present invention. Referring to FIG. 2, the device 200 can include a control unit 210 for generally controlling the device, a display unit 220 for displaying to a user results processed by the control unit 210, a reception unit 230 for receiving an input from a user, an intertwined information processing unit 240 for processing intertwined information, an intertwined information generator 250 for generating intertwined information, and an SOI generation unit 260.

The device 200 is a common navigator mounted on a vehicle and configured to provide a path guide service, but not limited thereto. For example, the device 200 can correspond to a device capable of providing a navigation service or a mapping service to a user. More particularly, the device 200 can correspond to a mobile device such as a smart phone, a tablet, a PDA, a WALLPAD, or an N-SCREEN, a telematics/HUD mounted on a vehicle, a notebook, or a desktop PC.

If the device 200 has a display based on a touch input, the display unit 220 and the reception unit 230 can be provided to a user in the same form. In this case, a task for displaying processing results and a task for processing a user input can be performed by separate elements within the device 200.

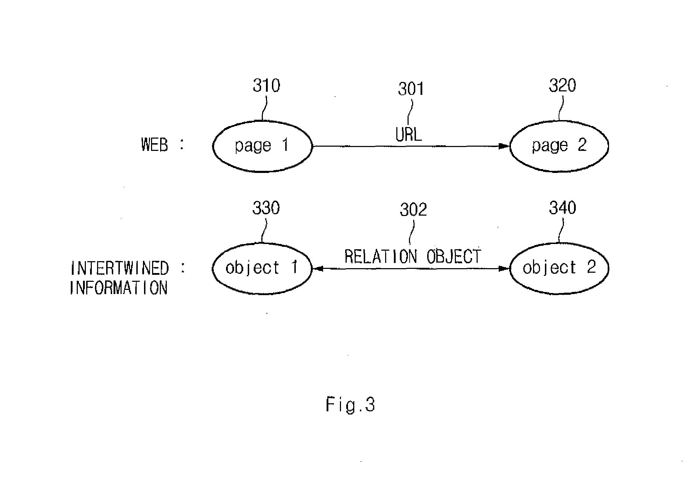

Intertwined information and a structure thereof are described in detail with reference to FIGS. 3, 4, and 5.

The device 200 does not need to necessarily have the intertwined information generator 250 and the SOI generation unit 260 (i.e., the SOI generation unit 260 can have a construction corresponding to the SOI generation apparatus 100). The device 200 may not include the intertwined information generator 250 and the SOI generation unit 260 depending on its construction. In this case, the device 200 can receive intertwined information and SOI information through a transceiver (not shown) from an external device (e.g., a server) that is connected to the device 200 in a wired or wireless manner. Furthermore, if information needs to be provided or a user input needs to be transmitted, the information or the user input can be transmitted to an external device through a transceiver. Elements, such as a storage unit, a GPS reception unit, an acceleration sensor, and an inertia sensor which are widely used, can be freely added to or removed from the device 200.

When a request for intertwined information on an SOI is received from the control unit 210, the intertwined information processing unit 240 collects pieces of information on objects that are intertwined with the SOI from an intertwined information structure. The objects can be content objects or SOI objects. The intertwined information processing unit 240 can also collect pieces of information on relation objects to be described later. The intertwined information processing unit 240 processes the pieces of collected information and provide the pieces of processed information to the display unit 220 so that they are displayed.

FIG. 3 shows the characteristics of a connection that forms a conventional web and a connection that is used in intertwined information of the present invention. Prior to a reference to FIG. 3, an object is described below. In this specification, the term 'object' refers to a target that can be generated, edited, processed, and managed by a user, a device, or the elements of the device. The object corresponds to the aforementioned SOI, Content of an SOI (COS), or separate content. Furthermore, a concept, such as a category, a theme, or a subject for classifying pieces of content or SOIs, can be managed as an object. Moreover, in the present invention, a relation between objects is managed as one object, that is, a relation object. That is, the relation object can be defined as one object including relation information that defines a relation between an SOI and an SOI, an SOI and content, or content and content. The relation object can include ID information for identifying a relation object itself or an SOI/content associated with the relation object, in addition to the relation information.

Referring back to FIG. 3, in a conventional web (i.e., a world wide web) environment, an object and an object are coupled by a link called a Uniform Resource Locator (URL). An object in a web environment can be a web page, an image, a moving image, a flash file, or all objects that can be connected by another URL.

In a web environment, a connection between a first page 310 and a second page 320 has a unidirectional characteristic. The first page 310 includes URL information 301, and the first page 310 can be connected to the second page 320 based on the URL information 301. However, the second page 320 is not connected to the first page 310 because it commonly does not have the URL information 301. Although the second page 320 includes a link (i.e., a URL) for a connection to the first page 310, this is only a special case in a unidirectional characteristic, but a connection in a web environment does not have a bidirectional characteristic.

In an intertwined information structure proposed by the present invention, a connection between a first object 330 and a second object 340 has a bidirectional characteristic. The two objects are connected to a relation object 302 (for reference, the two objects may be connected to one or more relation objects), and the relation object can include ID information for bidirectionality. Owing to the bidirectional characteristic, if a common object, such as the first object 330 or the second object 340 (here, the common object is different from a relation object. Unlike a relation object, a common object does not include information on a relation between two or more objects.) can access one object, the common object can access all objects related to the one object (i.e., having a connection structure connected by a relation object).

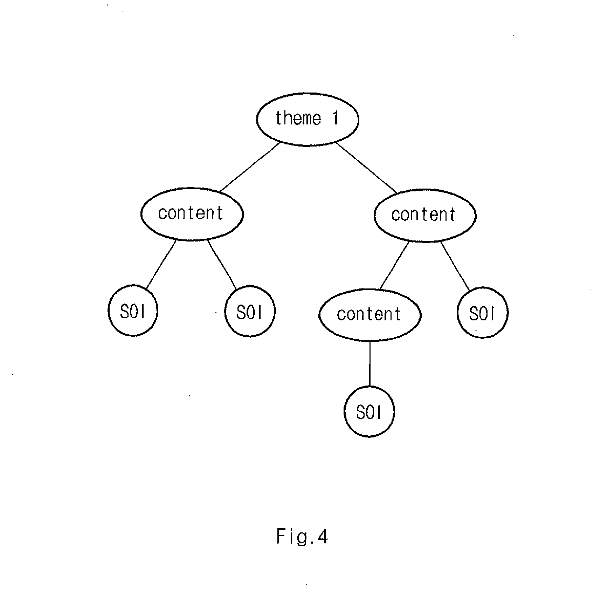

FIG. 4 shows an example of an intertwined information structure. Referring to FIG. 4, the highest-ranking object can be a theme, a category, or a subject of intertwined information. The highest-ranking object is hereinafter expressed by a theme or a theme object, for convenience sake.

A lower-ranking object can be content or an SOI. For example, in case of intertwined information having Hyundai Motor Company as a theme (i.e., the highest-ranking object is 'Hyundai Motor Company'), the content can correspond to the history of Hyundai Motor Company, the latest news regarding Hyundai Motor Company, the types of cars of Hyundai Motor Company, information on new cars, the cooperative firms of Hyundai Motor Company, and AS information. The SOI can correspond to an SOI for the location of the head office of Hyundai Motor Company, an SOI for the locations of a branch office, an SOI for the location of a research institute, and an SOI for the location of an overseas branch office.

The lower-ranking object can generate lower-ranking objects. For example, a content object 'A/S information' can have a location SOI for a point where A/S is provided as a lower-ranking object. In this case, an object placed at the last stage in the intertwined information structure must have an SOI as an object. In other words, in the intertwined information structure, an object having only one relation object with another object (i.e., the so-called lowest-ranking object) except the highest-ranking object must be an SOI object.

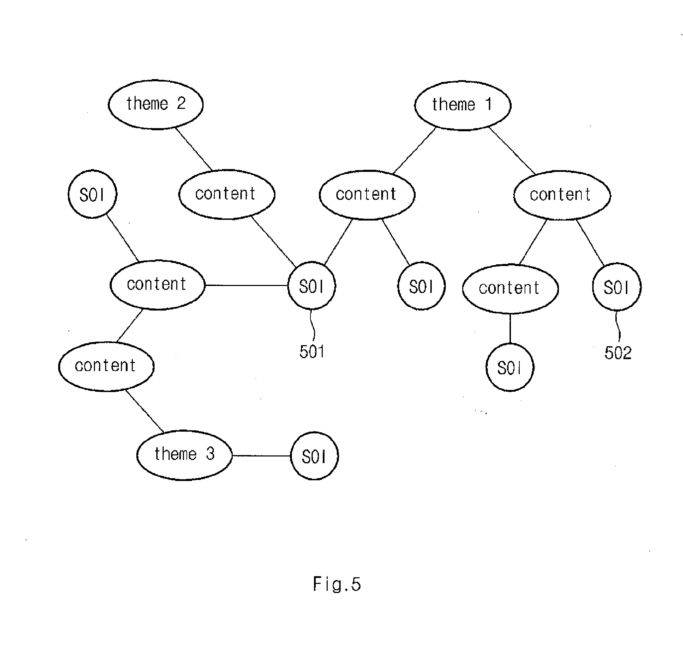

Owing to the bidirectionality of the intertwined information structure, all SOIs can access a theme 1. Furthermore, all the SOIs can access all pieces of content (only three are shown in FIG. 4, for example) and also access all other SOIs (only three are shown in FIG. 4). When the navigator 200 receives a user input that requests information on a specific SOI through this characteristic, the navigator 200 can provide information on a theme related to the specific SOI although the specific SOI and the theme are not directly connected (in some cases, an SOI and a theme may be directly connected. This example is shown in FIG. 5.) and can also provide content information/SOI information according to a hierarchical structure from the information on the theme.

FIG. 5 shows another example of an intertwined information structure. For reference, FIG. 5 does not have a tree structure, such as that shown in FIG. 4. Furthermore, a complex structure between objects is not limited to a representation method of FIG. 5, and an intertwined information structure may have a three-dimensional structure. Referring to FIG. 5, a specific SOI 501 can access a total of three themes theme 1, theme 2, and theme 3. Accordingly, if information on the specific SOI 501 is requested, the navigator 200 or the intertwined information processing unit 240 can extract the themes related to the specific SOI 501 and provide the extracted themes to a user.

In contrast, if an SOI 502 different from the specific SOI 501 is selected, a theme that is provided in relation to the SOI 502 can be only one theme (i.e., a theme 1). That is, a theme provided in relation to an SOI can be determined based on a range of a relation between the SOI 502 (i.e., a point of sight) and the highest-ranking object or the lowest-ranking object. In some embodiments, however, the above restrictions may not be placed. The range of a relation may be limited up to an N^{th} highest-ranking object. Referring to FIG. 5, if the SOI 502 is assumed to be a point of sight, the theme 1 is a first highest-ranking object that can be reached on the basis of the SOI 502 and the theme 2 and the theme 3 are second highest-ranking objects that can be reached on the basis of the SOI 502. If the theme 2 or the theme 3 includes another connected theme, the corresponding theme can be a third highest-ranking object.

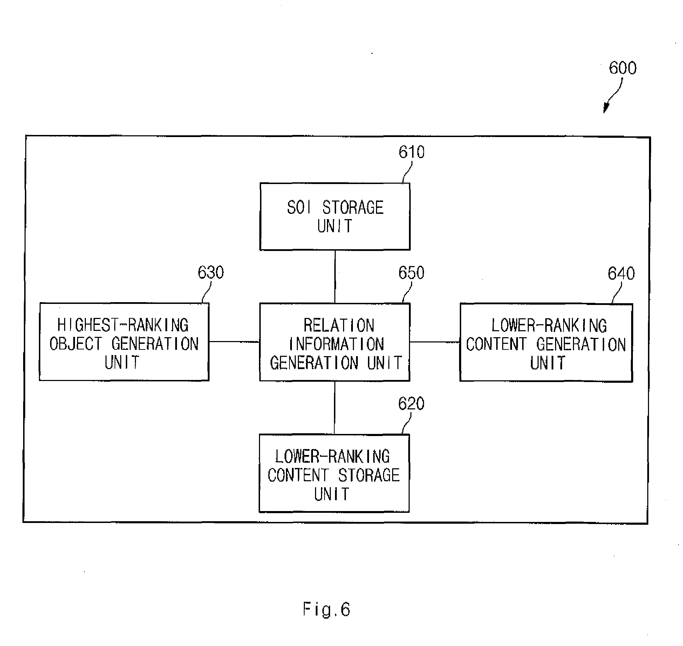

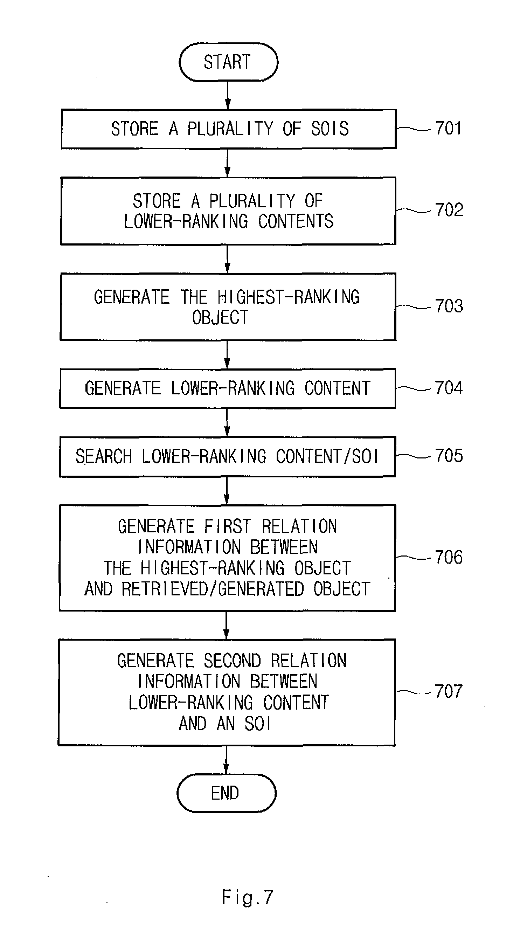

Intertwined information having this structure can be generated or edited by the device 200. However, the generation of intertwined information may be performed by an external device, such as the server of a service provider, owing to a reason, such as the specification of the device 200. The generation of intertwined information is described below with reference to FIGS. 6 and 7.

FIG. 6 shows the construction of an intertwined information generation apparatus 600 in accordance with one embodiment of the present invention. The intertwined information generation apparatus 600 can correspond to the intertwined information generator 250 of the device 200 shown in FIG. 2. Referring to FIG. 6, the intertwined information generation apparatus 600 includes an SOI storage unit 610, a lower-ranking content storage unit 620, a highest-ranking object generation unit 630, a lower-ranking content generation unit 640, and a relation information generation unit 650.

Each of the elements is described below. First, the SOI storage unit 610 stores information on a space (hereinafter referred to as an SOI) including location information, shape information, and ID information. That is, the SOI storage unit 610 stores a plurality of SOIs. An SOI can be generated by the SOI generation apparatus 100 described with reference to FIG. 1 and the SOI generation unit 260 of the device 200 described with reference to FIG. 2.

The lower-ranking content storage unit 620 stores a variety of pieces of lower-ranking content including text, images, and moving images or combinations of text, images, and moving images, such as blog, news, commodities, events, and advertisements. The pieces of lower-ranking content mean all pieces of contents that are intertwined with the lower ranks of a theme generated by the highest-ranking object generation unit 630. Furthermore, each of the pieces of lower-ranking content includes information on a relation (i.e., relation information) with at least one piece of another lower-ranking content or at least one another SOI, and thus the lower-ranking content can be connected to the at least one piece of another lower-ranking content or the at least one another SOI through a piece of content. The relation information is included in a relation object, and the above connection is performed by the relation object, thus have bidirectionality as described above.

The highest-ranking object generation unit 630 generates the highest-ranking content, including theme information on a complex object, at the request of a user.

The lower-ranking content generation unit 640 generates lower-ranking content at the request of a user.

The relation information generation unit 650 generates relation information between the highest-ranking content, that is, a theme generated by the highest-ranking object generation unit 630, and lower-ranking content generated by the lower-ranking content generation unit 640. Furthermore, the relation information generation unit 650 searches the lower-ranking content storage unit 620 for lower-ranking content requested by a user and also searches the SOI storage unit 610 for an SOI requested by the user. Next, the relation information generation unit 650 generates relation information between the highest-ranking content generated by the highest-ranking object generation unit 630 and the retrieved lower-ranking content. Furthermore, the relation information generation unit 650 may generate relation information between the highest-ranking content generated by the highest-ranking object generation unit 630 and the retrieved SOI.

The relation information generation unit 650 may generate first relation information between the highest-ranking content generated by the highest-ranking object generation unit 630 and lower-ranking content generated by the lower-ranking content generation unit 640 and generate second relation information between the highest-ranking content generated by the highest-ranking object generation unit 630 and the retrieved SOI.

Furthermore, the relation information generation unit 650 may generate first relation information between the highest-ranking content generated by the highest-ranking object generation unit 630 and the retrieved lower-ranking content and generate second relation information between the highest-ranking content generated by the highest-ranking object generation unit 630 and the retrieved SOI.

Furthermore, the relation information generation unit 650 may generate relation information between (primary) lower-ranking content, intertwined with the lower rank of the highest-ranking content generated by the highest-ranking object generation unit 630, and (secondary) further-intertwined lower-ranking content or SOI on the basis of the (primary) lower-ranking content.

Furthermore, the relation information generation unit 650 may generate relation information between an SOI, intertwined with the lower rank of the highest-ranking content generated by the highest-ranking object generation unit 630, and another further-intertwined lower-ranking content or SOI on the basis of the intertwined SOI.

Meanwhile, the relation information generation unit 650 may change a title of relation information and a description thereof at the request of a user.

In addition, the highest-ranking object generation unit 630, the lower-ranking content generation unit 640, and the relation information generation unit 650 can provide interfaces with a user through the input unit or display unit of the navigator 200.

For reference, the input unit may receive a specific SOI or specific content from a user on a list, receive a specific SOI or specific content from a user on a digital map, and receive a specific SOI or specific content from a user through a key input.

Furthermore, the input unit may receive pieces of information, such as relation order, a time attribute, and a description of content, from a user. The relation information generation unit 650 can include the pieces of information in relation information.

FIG. 7 is a flowchart illustrating a method of generating intertwined information in accordance with one embodiment of the present invention.

First, the SOI storage unit 610 stores information on a space (hereinafter referred to as an SOI) including location information, shape information, and ID information (701), and the lower-ranking content storage unit 620 stores a plurality of pieces of lower-ranking content (702). Next, the highest-ranking object generation unit 630 generates the highest-ranking content, that is, a theme object (703). Next, the lower-ranking content generation unit 640 generates lower-ranking content at the request of a user (704).

Next, the relation information generation unit 650 searches the lower-ranking content storage unit 620 and the SOI storage unit 610 for lower-ranking content and an SOI requested by a user (705) and generates first relation information between the theme object generated by the highest-ranking object generation unit 630 and the retrieved or generated lower-ranking content (706).

Furthermore, the relation information generation unit 650 generates second relation information between the lower-ranking content generated by the lower-ranking content generation unit 640 and the retrieved SOI (707).

Although not shown in the flowchart, the relation information generation unit 650 can generate third relation information between content and content or fourth relation information between an SOI and an SOI. This process can increase the connection extensibility of content for an SOI.

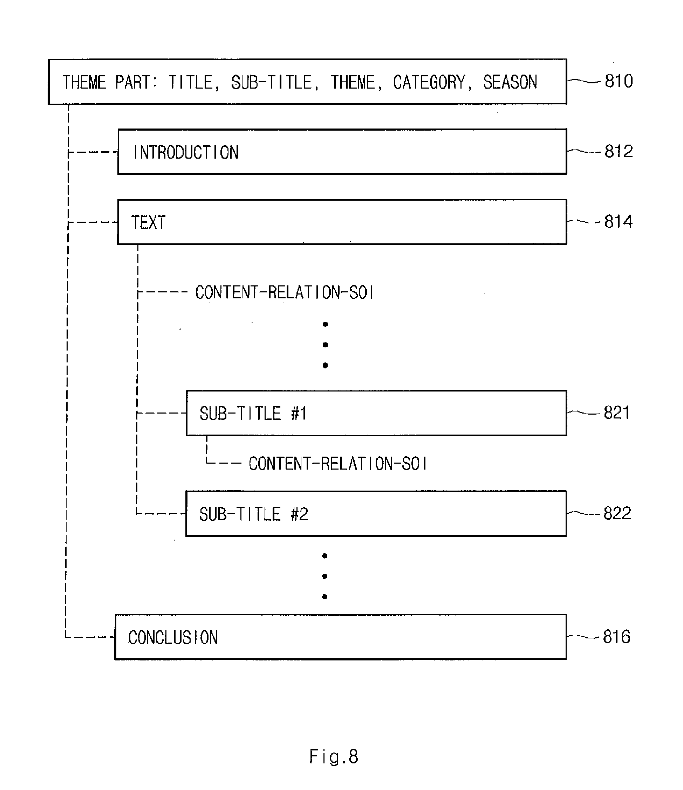

FIG. 8 shows the documented structure of intertwined information. Referring to FIG. 8, the intertwined information having the documented structure includes a theme part 810. The theme part 810 includes an introduction part 812, text 814, and a conclusion part 816 that are lower-ranking hierarchical structures. The theme part 810 is a title, a subtitle, a theme, a category, or a season, and the theme part 910 corresponds to the aforementioned highest-ranking object. The introduction part 812 and the conclusion part 816 are disposed before or after the text 814 or disposed at the top and bottom of the text 814. The introduction part 812 and the conclusion part 816 are not necessarily included in the theme part 810 and may be selectively provided.

The text 814 can include connection structures of content-relation object-SOI. In other words, a relation object structure, including a content object, an SOI object, and relation information on the two objects, can be included in the text 814. The content of the text 814 can provide a connection to a related SOI by using relation information. As described above, a so-called lowest-ranking object is necessarily an SOI.

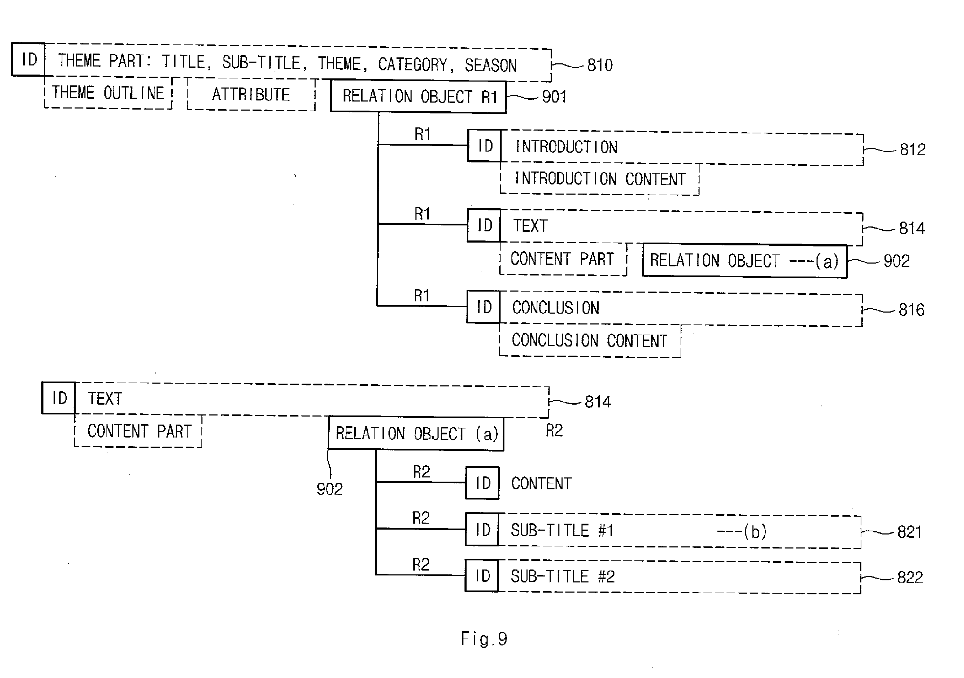

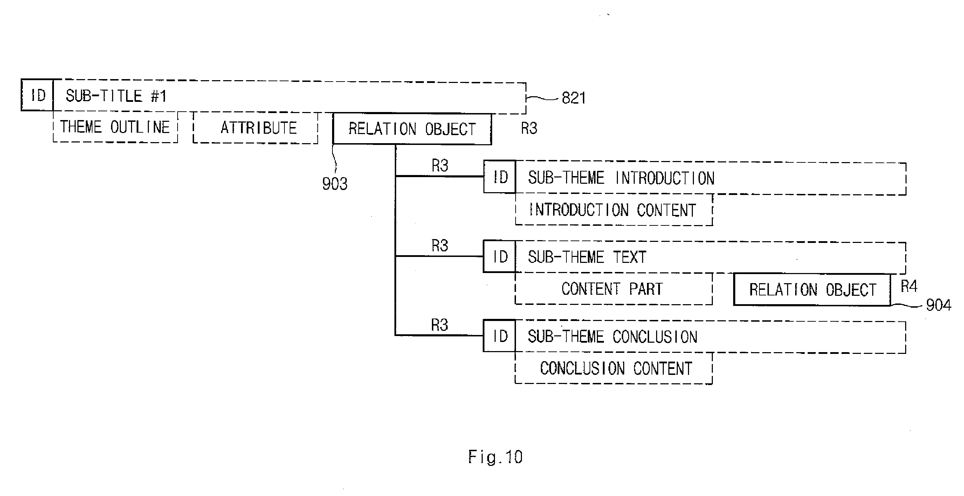

The text 814 can include lower-ranking hierarchical structures, such as a sub-theme#1 821 and a sub-theme#2 822. The sub-themes are described in detail with reference to FIGS. 9 and 10.

FIG. 9 shows the extension of intertwined information in a text stage. Referring to FIG. 9, the highest-ranking object corresponding to the theme part 810 can be extended to lower-ranking hierarchical structures, that is, the introduction part 812, the text 814, and the conclusion part 816 that are related to the theme part 810, with reference to a relation object R1 901. Here, ID information, such as an identifier (ID) included in the relation object, is used, and the ID information has a bidirectional characteristic. The text 814 can be further extended to lower-ranking hierarchical structures, that is, content and a sub-theme that are related to the text 814, with reference to a relation object R2 90.

FIG. 10 shows the extension of intertwined information in a sub-theme stage. Referring to FIG. 10, the sub-theme#1 821 can be extended to lower-ranking hierarchical structures, that is, sub-theme introduction/text/conclusion parts, with reference to the relation object R3 903, and the sub-theme text part can be repeatedly extended with reference to a relation object R4 904.

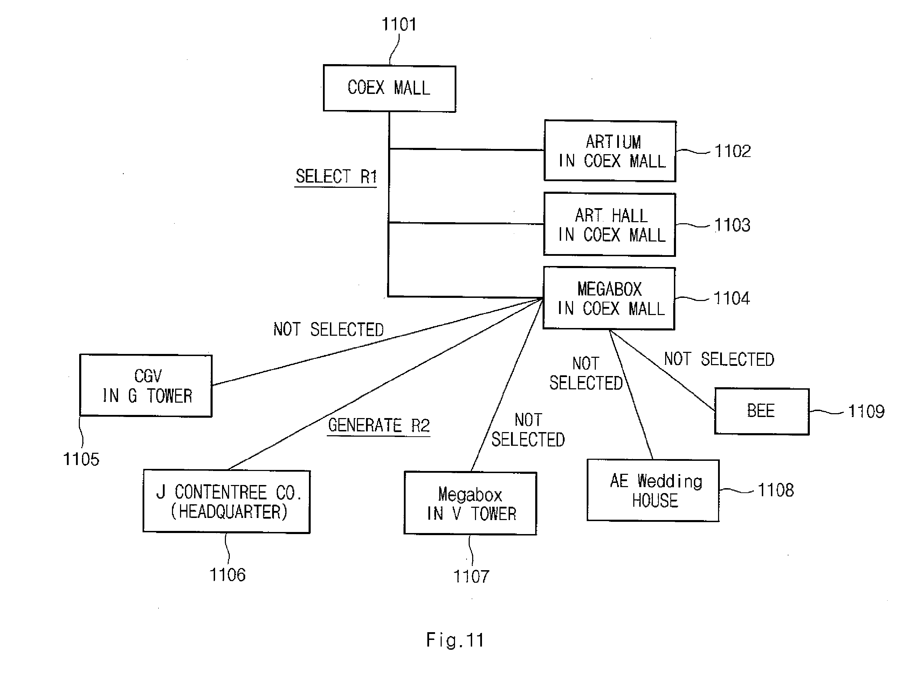

FIG. 11 is a conceptual diagram for editing intertwined information by using a relation object. For convenience' sake, an object shown in FIG. 11 is commonly designated by an 'object' irrespective of content or an SOI. A first method of editing intertwined information by using a relation object is to configure intertwined information by selecting the existing relation. Referring to FIG. 11, if a relation object R1 is selected, all the objects of Coex mall 1101, Artium 1102, Art Hall 1103, and Megabox 1104 are selected. This method is more convenient than a method of selecting objects to be edited one by one. Furthermore, as described above, a plurality of relation objects can be present between two objects, and only some of the plurality of relation objects may be selected and edited. As a result, there is an advantage in that selected objects are the same, but a relation between an edited object and a selected object is specified.

A second method of editing intertwined information by using a relation object is to configure intertwined information by generating a new relation. For example, a new relation between the objet "Megabox" 1104 and an object "j contentree co." 1106 can be generated (i.e., a relation object R2 can be generated).

For example, if a user edits intertwined information by selecting the relation object R1 and generating the new relation object R2, there is an advantage in that the intertwined information is edited by selecting the five objects. Furthermore, if all selected relation objects are SOI objects, a new SOI that includes all the selected SOI objects can be generated.

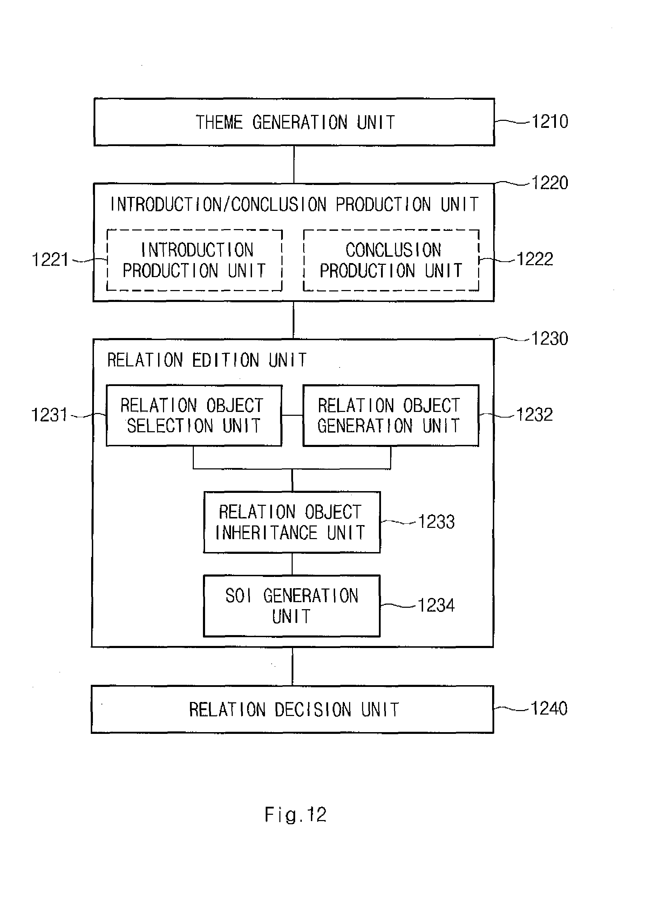

FIG. 12 shows an intertwined information generation apparatus in accordance with another embodiment of the present invention. The elements of the intertwined information generation apparatus shown in FIG. 12 can correspond to the elements of the intertwined information generation apparatus 600 shown in FIG. 6 depending on the identity or similarity of a function that is performed. For example, a theme generation unit 1210 of FIG. 12 can correspond to the highest-ranking object generation unit 630 of FIG. 6.

The intertwined information generation apparatus of FIG. 12 can include the theme generation unit 1210, an introduction/conclusion production unit 1220, a relation edition unit 1230, and a relation decision unit 1240. In some embodiments, an introduction production unit 1221 and a conclusion production unit 1222 may be separately included instead of the introduction/conclusion production unit 1220. Furthermore, the introduction/conclusion production unit may be omitted as described above.

The relation edition unit 1230 can include a relation object selection unit 1231, a relation object generation unit 1232, a relation object inheritance unit 1233, and an SOI generation unit 1234. The relation object selection unit 1231 performs the edition of intertwined information based on the selection of the existing relation object, and the relation object generation unit 1232 performs the edition of intertwined information based on the generation of a new relation object. In some embodiments, intertwined information can be edited by mixing the selection of the existing relation object and the generation of a new relation object as described above with reference to FIG. 11.

The relation object inheritance unit 1233 inherits information on an object or relation object extended from, that is, indirectly connected to another relation object that is included in at least two objects directly connected by a relation object. A lower-ranking relation can be inherited based on a higher-ranking relation, and an SOI and content connected to a corresponding relation based on a relation object can be limited.

The SOI generation unit 1234 can connect a plurality of SOIs by a relation object and generate all the SOIs as a new SOI. A new SOI can be generated if an SOI object and an SOI object are connected, but a new SOI cannot be generated if content and an SOI are connected. In this case, a new SOI cannot be generated in terms of the properties of the SOI because the SOI has dot, line, plane, and space characteristics. If content and an SOI are connected, the SOI can be connected to the content by a simple connection.

The relation decision unit 1240 decides a relation, that is, a relation object between at least two objects that are generated by the selection of the existing relation object and/or the generation of a new relation object. Not only relation information and ID information for a bidirectional connection, but also pieces of common information, such as a generation time, can be included in a relation object.

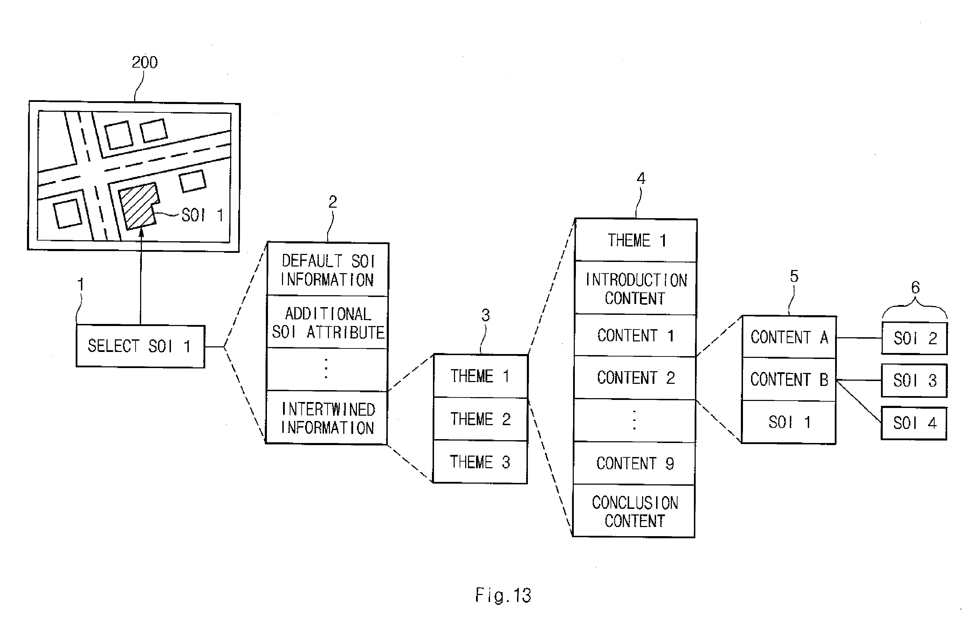

FIG. 13 shows an exemplary method of providing intertwined information through a navigator. Referring to FIG. 13, the navigator 200 can provide a path guide service, a mapping service, etc. A user selects an SOI 1 in a service screen. In response to the selection, first information 2 is provided. The first information 2 can include SOI-basic information, an SOI-supplementary attribute, and intertwined information. The SOI-basic information can include basic information that specifies an SOI, such as SOI location information, SOI shape information, and SOI ID information. The SOI-supplementary attribute can be, for example, a telephone corresponding to the SOI, and the SOI can be set as a starting point, a departure, etc.

The intertwined information can be checked by the methods described with reference to FIGS. 4 and 5 on the basis of the selected SOI 1 and can be processed and provided by the intertwined information processing unit 240. When a user selects an intertwined information item, second information 3, that is, a list of highest-ranking objects related to the SOI 1, can be provided to the user. In this example, the SOI 1 is illustrated as being related to three themes Theme 1, Theme 2, and Theme 3. When the user selects the Theme 1, third information 4 including introduction content, text content, and conclusion content (here, the introduction content and the conclusion content may be omitted) that are connected to the Theme 1 by a relation object and placed in a lower-ranking structure is provided to the user. For example, when the user selects the content 2 of the text content, fourth information 5 including objects that are connected to the content 2 by a relation object and placed in a lower-ranking structure is provided to the user. The fourth information 5 can include not only pieces of lower-ranking content A and B, but also the first SOI 1. Furthermore, fifth information 6 that provides the lowest-ranking object includes only SOI objects.

The above steps can be reduced or extended. Furthermore, if an SOI object is selected from objects provided by each step, a step corresponding to the second information can be repeatedly provided. For example, if an object SOI 2 is selected in the step of the fifth information 6, second information corresponding to the SOI 2, that is, SOI 2-basic information, an SOI 2-supplementary attribute, and SOI 2 intertwined information, can be provided.

Meanwhile, the aforementioned methods of the present invention can be written in the form of a computer program. A code and code segment that form the program can be readily induced by a corresponding computer programmer. Furthermore, the written program can be stored in a computer-readable recording medium (i.e., an information storage medium), and when a computer reads and executes the recording medium, the methods of the present invention are implemented. Furthermore, the recording medium includes all types of computer-readable recording media.

As described above, the present invention is advantageous in that it can increase the connection extensibility of content for an SOI by generating second relation information between one SOI, including location information, shape information, and ID information, and one piece of content having first relation information between the one piece of content and another content or another SOI.

Furthermore, there is an advantage in that the user of a navigator can easily access content related to an SOI and other SOIs.

Furthermore, a relation-based edition method more convenient than a method of selecting and editing each object can be provided because intertwined information can be edited by using a relation object.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

### SYMBOL OF EACH OF THE ELEMENTS IN THE FIGURES

FIG. 1

| | |
|---|---|
| 110: | location information generator |
| 111: | unit structure generation unit |
| 112: | vertical structure generation unit |
| 113: | horizontal structure generation unit |
| 114: | floor structure generation unit |
| 120: | shape information generator |
| 130: | ID information generator |

FIG. 2

| | | | |
|---|---|---|---|
| 210: | control unit | 220: | display unit |
| 230: | reception unit | 240: | intertwined information processing unit |
| 250: | intertwined information generator | | |
| 260: | SOI generation unit | | |

FIG. 6

| | |
|---|---|
| 610: | SOI storage unit |
| 620: | lower-ranking content storage unit |
| 630: | highest-ranking object generation unit |
| 640: | lower-ranking content generation unit |
| 650: | relation information generation unit |

FIG. 7

| | |
|---|---|
| 701: | Store a plurality of SOIs |
| 702: | Store a plurality of lower-ranking contents |
| 703: | Generate the highest-ranking object |
| 704: | Generate lower-ranking content |
| 705: | Search lower-ranking content/SOI |
| 706: | Generate first relation information between the highest-ranking object and retrieved/generated object |
| 707: | Generate second relation information between lower-ranking content and an SOI |

FIG. 8

| | | | |
|---|---|---|---|
| 810: | Theme part: Title, Sub-title, Theme, Category, Season | | |
| 812: | Introduction | 814: | Text |
| 821: | Sub-Title #1 | 822: | Sub-Title #2 |
| 816: | Conclusion | | |

FIG. 12

| | |
|---|---|
| 1210: | theme generation unit |
| 1220: | introduction/conclusion production unit |
| 1221: | introduction production unit |
| 1222: | conclusion production unit |
| 1230: | relation edition unit |
| 1231: | relation object selection unit |
| 1232: | relation object generation unit |
| 1233: | relation object inheritance unit |
| 1234: | SOI generation unit |
| 1240: | relation decision unit |

## Claims

1. A device for providing intertwined information related to a space of interest (SOI), the device comprising:
an input unit which receives an input for selecting one SOI from a user;
a control unit which requests intertwined information on the selected SOI based on the input;
an intertwined information processing unit which collects object information, intertwined with the SOI, from an intertwined information structure related to the SOI at a request of the control unit; and
a display unit which displays the intertwined information to the user,
wherein the intertwined information structure comprises a highest-ranking object, a lower-ranking object comprising a content object or an SOI object, and a lowest-ranking object, the highest-ranking object, the lower-ranking object, and the lowest-ranking object are connected by at least one relation object, and the relation object comprises relation information, defining a relation for at least two objects connected by the relation object, and identifier (ID) information for a bidirectional connection.

2. The device according to claim 1, wherein:
the highest-ranking object is a theme object comprising pieces of content that correspond to lower-ranking structures of the highest-ranking object, and
the lowest-ranking object is an SOI object.

3. The device according to claim 1, wherein the control unit controls the display unit so that the intertwined information and basic information and a supplementary attribute for the selected SOI are displayed together.

4. The device according to claim 3, wherein when the user selects the intertwined information through the input unit, the intertwined information processing unit provides a list of at least one highest-ranking object intertwined with the SOI.

5. The device according to claim 4, wherein when the user selects at least one highest-ranking object from the list of at least one highest-ranking object through the input unit, the intertwined information processing unit provides a list of lower-ranking objects of the selected highest-ranking object in the intertwined information structure.

6. The device according to claim 5, wherein the list of the lower-ranking objects further comprises an introduction content object or a conclusion content object in addition to a text content object.

7. The device according to claim 5, wherein:
the list of lower-ranking objects comprises at least one piece of content and at lest one SOI, and
when an input for selecting the at least one SOI is received through the input unit, the intertwined information processing unit provides basic information, a supplementary attribute, and intertwined information related to the selected SOI.

8. An apparatus for generating intertwined information having an intertwined information structure, comprising a highest-ranking object, a lower-ranking object comprising a content object or a space of interest (SOI) object, and a lowest-ranking object which are connected by at least one relation object, the apparatus comprising:
the theme generation unit configured to configure the highest-ranking object;
a relation edition unit configured to edit a relation that connects at least two objects of the highest-ranking object, the content object, and the SOI object; and
a relation decision unit configured to decide a relation object, comprising information on the relation edited by the relation edition unit, information on the at least two objects related to the relation, and identifier (ID) information for a bidirectional connection between the at least two objects,
wherein the relation edition unit comprises a relation object inheritance unit for inheriting information on an object that is able to be indirectly connected to the at least two objects.

9. The apparatus according to claim 8, wherein:
the relation edition unit further comprises a relation object selection unit, and
when an input for selecting a relation object is received from a user, the relation object selection unit edits intertwined information on all objects connected to the selected relation object.

10. The apparatus according to claim 8 or 9, wherein:
the relation edition unit further comprises a relation object generation unit, and
when an input for generating a new relation object between a first object and a second object is received from a user, the relation object generation unit edits intertwined information on all objects connected to the generated relation object.

11. The apparatus according to claim 10, wherein when an input for selecting at least one relation object and an input for generating at least one new relation object are together received from a user, the relation edition unit edits intertwined information on all objects that are connected to the selected relation object and the generated relation object.

12. The apparatus according to claim 10, wherein:
the relation edition unit further comprises an SOI generation unit, and
the SOI generation unit determines whether all objects connected by the relation objects are SOI objects or not, and
if, as a result of the determination, all the objects are determined to be SOI objects, the SOI generation unit generates a new SOI object comprising all the SOI objects.

13. The apparatus according to claim 8, wherein the relation decision unit enables the relation object to further comprise information on a time when the relation is generated.
